# EUROPEAN PATENT APPLICATION

(11) **EP 4 442 421 A1**
(43) Date of publication of application: **09.10.2024**
(21) Application number: 23382333.5
(22) Date of filing: 06.04.2023
(51) Int. Cl.: B29B 11/16

(54) **APPARATUS AND METHOD FOR FORMING A BRAIDED PREFORM TO FABRICATE A BRAIDED STRUCTURE**

(71) Applicant: The Boeing Company, Arlington, VA 22202 (US)
(72) Inventor: SCHEOPEN HICKMAN, Gregory James, LADSON, 29456 (US); MARTÍN ALONSO, Pedro Pablo, 28042 MADRID (ES); MORRISSEY, Emma Louise, BERKELEY, 63134 (US); WILKERSON, Randall Dow, ST. LOUIS, 63166 (US)
(74) Representative: ZBM Patents - Zea, Barlocci & Markvardsen

(57) **Abstract**

An apparatus (200) is provided for forming a braided preform (206) with a desired shape. The apparatus comprises a layup mandrel (220) having a central portion (224) interconnecting opposite end portions (222, 226). The apparatus also comprises a braiding wheel (210) disposed at one end portion of the layup mandrel and arranged to receive braiding material (130) for a braided layer (204) to be formed on the layup mandrel. The apparatus further comprises a pressure-application device (240) disposed at the other end portion of the layup mandrel and arranged to apply mechanical pressure to the braided layer on the layup mandrel to thereby form the braided preform.

## Description

### FIELD

The present application relates to braided structures and, more particularly, to an apparatus and method for forming a braided preform to fabricate a braided structure.

### BACKGROUND

A braided preform is usually formed using a braiding wheel and a layup mandrel on which a suitable braidable composite material is manipulated by the braiding wheel to provide a braided layer on the layup mandrel. Heat and pressure are then applied to the braided layer to consolidate the braidable composite material to provide a braided preform. The braided preform is sometimes braided with successive layers to provide a braided preform with multiple plies. The single-ply or multiple-plies braided preform is debulked, and subsequently processed to fabricate a braided structure with a desired shape. The known ways of consolidating a braidable composite material to provide a braided preform, debulking the braided preform, and then processing the debulked braided preform to fabricate a braided structure are labor-intensive and time-consuming. It would be desirable to overcome drawbacks of known ways of consolidating and debulking braided preforms to fabricate a braided structure.

### SUMMARY

In one aspect, a method is provided for forming a braided preform with a desired shape. The method comprises forming a braided preform layer. The method also comprises applying an in-line mechanical pressure to the braided preform layer to consolidate or debulk, or both, the braided preform layer to thereby provide the braided preform with the desired shape.

In another aspect, an apparatus is provided for forming a braided preform with a desired shape. The apparatus comprises a layup mandrel having a central portion interconnecting opposite end portions. The apparatus also comprises a braidable wheel disposed at one end portion of the layup mandrel and arranged to receive braiding material for a braided layer to be formed on the layup mandrel. The apparatus further comprises a pressure-application device disposed at the other end portion of the layup mandrel and arranged to apply mechanical pressure to the braided layer on the layup mandrel to thereby form the braided preform.

In yet another aspect, a method is provided for fabricating a net-trimmed braided structure with a desired shape. The method comprises forming a braided preform layer along an in-line manufacturing process. The method also comprises applying mechanical pressure to the braided preform layer to consolidate or debulk, or both, the braided preform layer to thereby provide a near-net braided preform from which the net-trimmed braided structure with the desired shape can be fabricated.

Other aspects will become apparent from the following detailed description, the accompanying drawings and the appended claims.

### BRIEF DESCRIPTION OF THE DRAWINGS

Fig. 1 is a block diagram representation of a manufacturing system for fabricating a net-trimmed braided structure in accordance with an embodiment.
Fig. 1A is a schematic diagram of an example braidable material that can be used in the manufacturing system of Fig. 1.
Fig. 2 is a schematic, perspective view of a portion of the manufacturing system of Fig. 1.
Fig. 2A is a cross-sectional view of an example multiple-layered braided preform that can be formed using the manufacturing system of Fig. 1.
Fig. 3 is a perspective view of an example braided structure that can be fabricated using the manufacturing system of Fig. 1.
Fig. 3A is a perspective view of another example braided structure that can be fabricated using the manufacturing system of Fig. 1.
Fig. 3B is a perspective view of another example braided structure that can be fabricated using the manufacturing system of Fig. 1.
Fig. 4 is a flow diagram depicting an example method for forming a braided preform with a desired shape in accordance with an embodiment.
Fig. 5 is a flow diagram depicting an example method for fabricating a net-trimmed braided structure with a desired shape in accordance with an embodiment.
Fig. 6 is a flow diagram of an aircraft manufacturing and service methodology.
Fig. 7 is a block diagram of an aircraft.

### DETAILED DESCRIPTION

The present application is directed to an apparatus and method for forming a braided preform to fabricate a braided structure. The specific construction of the apparatus and method therefor and the industry in which the apparatus and method are implemented may vary. It is to be understood that the disclosure below provides a number of embodiments or examples for implementing different features of various embodiments. Specific examples of components and arrangements are described to simplify the present disclosure. These are merely examples and are not intended to be limiting.

By way of example, the disclosure below describes an apparatus and method for forming a braided preform to fabricate a net-trimmed braided structure for an airplane part. The apparatus and method may be implemented by an original equipment manufacturer (OEM) in compliance with military and space regulations. It is conceivable that the disclosed apparatus and method may be implemented in many other manufacturing industries.

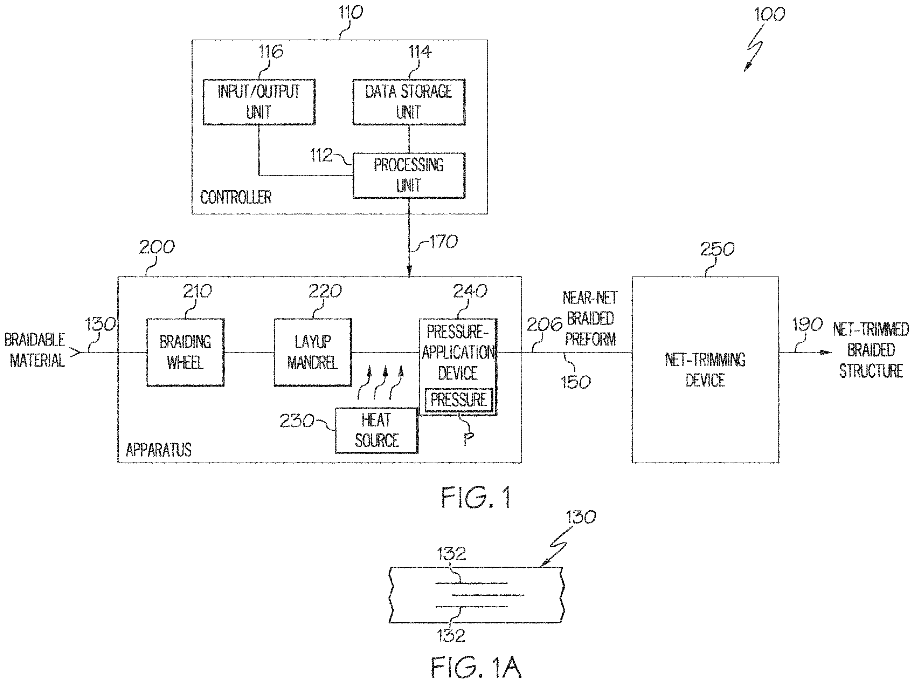

Referring to Fig. 1, a block diagram representation of a manufacturing system 100 for fabricating a net-trimmed braided structure in accordance with an embodiment is illustrated. The system 100 includes an apparatus 200 that receives a braidable material on line 130 and provides a near-net braided preform on line 150 in response to control signals on line 170 from a controller 110.

Controller 110 includes processing unit 112 that executes instructions stored in internal data storage unit 114, external data storage unit (not shown), or a combination thereof. Processing unit 112 may comprise any type of technology. For example, processing unit 112 may comprise a general-purpose electronic processor. Other types of processors and processing unit technologies are possible. Internal data storage unit 114 may comprise any type of technology. For example, internal data storage unit 114 may comprise random access memory (RAM), read only memory (ROM), solid state memory, or any combination thereof. Other types of memories and data storage unit technologies are possible.

Controller 110 further includes a number of input/output (I/O) devices 116 that may comprise any type of technology. For example, I/O devices 116 may comprise a keypad, a keyboard, a touch-sensitive display screen, a liquid crystal display (LCD) screen, a microphone, a speaker, or any combination thereof. Other types of I/O devices and technologies are possible.

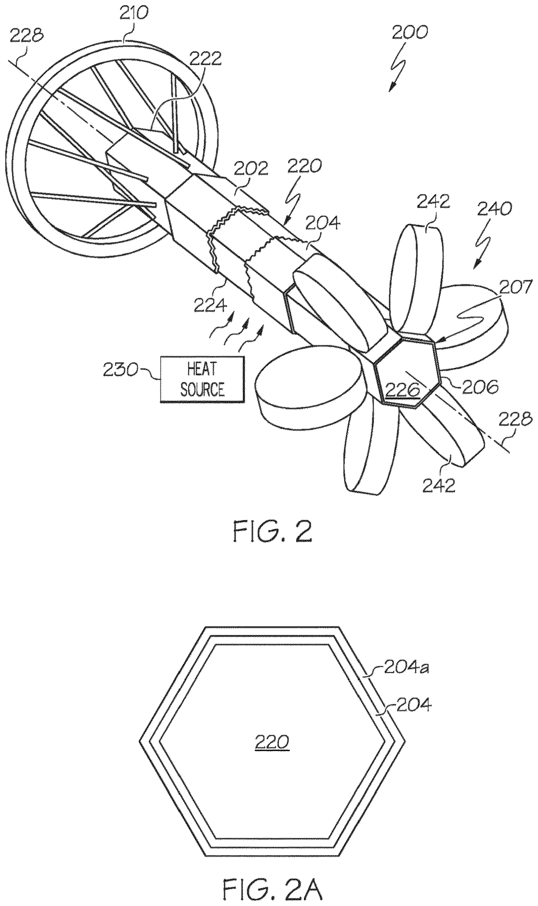

Referring to Fig. 2, a schematic, perspective view of a portion of the manufacturing system 100 of Fig. 1 is illustrated, and in particular the apparatus 200 shown in Fig. 1. As shown in Figs. 1 and 2, the apparatus 200 includes a layup mandrel 220 having a central portion 224 interconnecting opposite end portions 222, 226. The layup mandrel 220 may comprise an elongated shape having a central axis 228 and a hexagonal cross-section. Other cross sections of the layup mandrel 220 are possible. Alternatively, the layup mandrel 220 may comprise a curvilinear shape. The layup mandrel 220 may comprise any type of mandrel, such as a spar mandrel. As other examples, the layup mandrel 220 may comprise a shaped mandrel, a variable cross-section mandrel, or a tubular structure that can be either straight or curved. The layup mandrel 220 may comprise any type of material, such as metal or a dissolvable material.

The apparatus 200 also includes a braiding wheel 210 disposed at the one end portion 222 of the layup mandrel 220 and arranged to receive braidable material on line 130. As shown in schematic diagram of Fig. 1A, the braidable material on line 130 may comprise a thermoplastic slit-tape having unidirectional fibers 132, such as a carbon-fiber reinforced material. Other types of braidable material are possible. The braiding wheel 210 operates to form a braided layer 202 (shown partially sectioned away in Fig. 2 so that details of the layup mandrel 220 are visible) on the layup mandrel 220. Structure and operation of a braiding wheel to form a braided layer on a layup mandrel are known and, therefore, will not be described.

The apparatus 200 further includes a heat source 230 arranged to apply heat at the central portion 224 of the layup mandrel 220 to heat the braided layer 202 that has been formed on the layup mandrel 220 by the braiding wheel 210 to provide a heated braided layer 204 (also shown sectioned away in Fig. 2). The heat source 230 may comprise a select one of a microwave source and an infrared source. Other types of heat sources are possible, such as heat blankets. Alternatively, or in addition to, the layup mandrel 220 may include self-heating capabilities. Although the heat source 230 is shown part of the apparatus 200 in Fig. 1, it is conceivable that the heat source be separate from and not part of the apparatus 200.

The apparatus also includes a pressure-application device 240 disposed at the other end portion 226 of the layup mandrel 220. The pressure-application device 240 is arranged to apply in-line mechanical pressure P to the heated braided layer 204 on the layup mandrel 220 to form a braided preform 206 (Fig. 2) having the desired shape (207) at the end portion 226 of the layup mandrel 220.

In accordance with one aspect of the present disclosure, the pressure-application device 240 includes a number of forming rollers 242, such as shown in Fig. 2, that are circumferentially spaced apart from each other around the central axis 228 of the layup mandrel 220. In some implementations, the forming rollers 242 are circumferentially spaced equidistantly apart from each other around the central axis 228 of the layup mandrel 220. The forming rollers 242 apply pressure P on the heated braided layer 204 and shapes down to the layup mandrel 220 (which can have a complex geometry) to provide a debulked braided layer that can be overbraided and debulked again. This process can be repeated in-situ in multiple instances using the same braiding wheel 210 or using multiple braiding wheels in series along a braiding production line of the manufacturing system 100.

More specifically, the forming rollers 242 provide a compacting force on the entire circumference of the heated braided preform 204 as the braided preform is being produced on the layup mandrel 220. The compacting force joins braided preform layers together on the layup mandrel 220, and forms and debulks the entire circumference of the heated braided preform 204 to provide the near-net braided preform 206 having the desired shape (207), as shown on the layup mandrel 220 in Fig. 2 and on line 150 in Fig. 1. In addition, the braiding wheel 210 provides tension to help with a clean, defect-free reduction in bulk factor.

In accordance with another aspect of the present disclosure, components of the apparatus 200 (i.e., the braiding wheel 210, the layup mandrel 220, and the pressure-application device 240) are arranged in an in-line configuration. When arranged in an in-line configuration, the braiding wheel 210 is capable of longitudinally traversing between the opposite end portions 222, 226 of the layup mandrel 220. The controller 110 controls the forming rollers 242 to apply an in-line mechanical pressure P to the heated braided preform layer 204 to consolidate or debulk, or both, the heated braided preform layer 204 on the layup mandrel 220 to provide the near-net braided preform 206 having the desired shape 207 on line 150 (Fig. 1). The consolidation and/or debulking capabilities are performed in-situ along a serial braiding production line.

The near-net braided preform 206 on line 150 in Fig. 1 can be post processed by a net-trimming device 250 to provide a net-trimmed braided structure with a desired shape on line 190. As an example, the net-trimming device 250 may comprise a stamping machine. Other types of net-trimming devices are possible. The net-trimmed braided structure on line 190 can be easily fabricated with a desired shape from the near-net braided preform 206 that comprises either a single-layered braided preform or a multiple-layered braided preform, as will be described herein.

Referring to cross-sectional view of Fig. 2A, at least one additional braided preform layer 204a (i.e., another braided preform layer) can be formed over a previously-formed braided preform layer 204 to form two or more braided preform layers prior to applying in-line mechanical pressure P to the two or more braided preform layers. The at least one additional braided preform layer 204a is formed over the previously-formed braided preform layer 204 without having to remove the previously-formed braided preform layer from the layup mandrel 220 on which it is mounted to repeat a process of forming one or more successive braided preform layers (i.e., overbraiding) onto the previously-formed braided preform layer. It should be apparent that a multiple layered braided preform is produced in-situ along the serial production line of the manufacturing system 100 shown in Fig. 1. The multiple braided layers can be straight braids as well as complex braids including open profile structures and curved profiles.

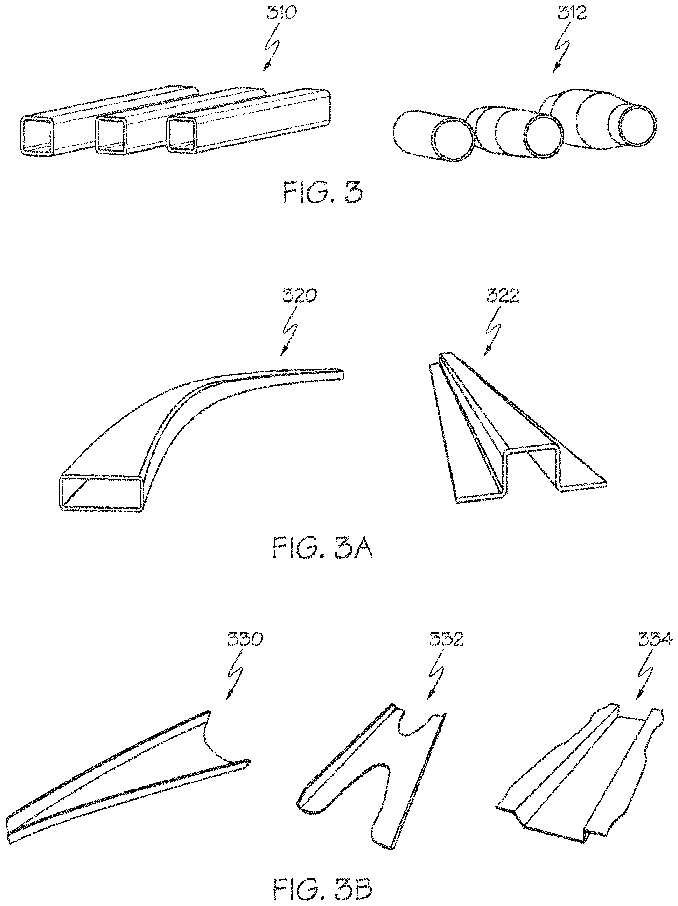

The shape of a net-trimmed braided structure on line 190 may comprise any shape including complex shapes having curved profiles and variable cross-sections. For example as shown in Fig. 3, a net-trimmed braided structure has a closed profile and may comprise a rectangular tube 310, or a circular tube 312 having a variable cross-section.

As another example as shown in Fig. 3A, a net-trimmed braided structure has an open profile and may comprise a curved C-frame 320 or a straight hat stiffener 322. A net-trimmed braided structure having an open profile can be obtained by longitudinally cutting a net-trimmed braided structure having a closed profile.

As still another example as shown in Fig. 3B, a net-trimmed braided structure has a complex profile and shape and may comprise a spar 330 for an airplane. Other net-trimmed braided structures with complex profiles and shapes for airplane parts, such as airplane part 332 and airplane part 334 shown in Fig. 3B are possible. Airplane parts with complex profiles and shapes, such as a spar, a stringer, a frame, a small rib, a rib with joggles, a fitting, and a changing web width floor beam, can be fabricated using the manufacturing system 100 of Fig. 1.

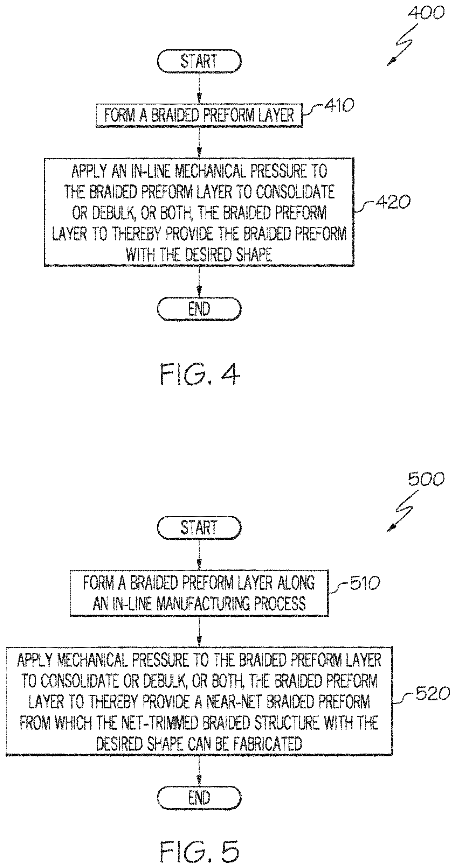

Referring to Fig. 4, a flow diagram 400 depicts an example method for forming a braided preform with a desired shape in accordance with an embodiment. In block 410, a braided preform layer is formed. Then in block 420, an in-line mechanical pressure P is applied to the braided preform layer to consolidate or debulk, or both, the braided preform layer to thereby provide the braided preform with the desired shape.

In some embodiments, the method further comprises forming at least one additional braided preform layer over the formed braided preform layer to form two or more braided preform layers prior to applying in-line mechanical pressure P to the two or more braided preform layers.

In some embodiments, an in-line mechanical pressure P is applied to two or more braided preform layers to consolidate or debulk, or both, the two or more braided preform layers to thereby provide the braided preform with the desired shape.

In some embodiments, another braided preform layer is formed over the consolidated or debulked braided preform layer, and an in-line mechanical pressure P is applied to the braided preform layers to consolidate or debulk, or both, the braided preform layers to thereby provide the braided preform with the desired shape.

In some embodiments, a braidable material is moved from a braiding wheel onto a layup mandrel to form the braided preform layer on the layup mandrel.

In some embodiments, a thermoplastic slit-tape having unidirectional fibers is moved from a braiding wheel onto a layup mandrel to form the braided preform layer on the layup mandrel.

In some embodiments, a braidable material is moved from a braiding wheel onto a spar mandrel to form a braided preform layer on the spar mandrel.

In some embodiments, a thermoplastic slit-tape having unidirectional fibers is moved from a braiding wheel onto a spar mandrel to form the braided preform layer on the spar mandrel.

In some embodiments, heat is applied to the braided preform layer.

In some embodiments, heat is applied to the braided preform layer from a select one of a microwave source and an infrared source to the braided preform layer.

In some embodiments, an in-line mechanical pressure P is applied from a number of forming rollers circumferentially spaced apart around a central axis of a layup mandrel to the braided preform layer.

In some embodiments, an in-line mechanical pressure P is applied from a number of forming rollers circumferentially spaced equidistantly apart from each other around a central axis of a layup mandrel to the braided preform layer.

In some embodiments, the method is performed by a controller having a memory executing one or more programs of instructions which are tangibly embodied in a program storage medium readable by the controller.

In some embodiments, a portion of an aircraft is assembled according to the method depicted in Fig. 4.

Referring to Fig. 5, a flow diagram 500 depicts an example method for fabricating a net-trimmed braided structure with a desired shape in accordance with an embodiment. In block 510, a braided preform layer is formed along an in-line manufacturing process. Then in block 520, mechanical pressure is applied to the braided preform layer to consolidate or debulk, or both, the braided preform layer to thereby provide a near-net braided preform from which the net-trimmed braided structure with the desired shape can be fabricated.

In some embodiments, at least one additional braided preform layer is formed over the formed braided preform layer to form two or more braided preform layers prior to applying mechanical pressure to the two or more braided preform layers.

In some embodiments, mechanical pressure is applied to two or more braided preform layers to consolidate or debulk, or both, the two or more braided preform layers to thereby provide the near-net braided preform.

In some embodiments, another braided preform layer is formed over the consolidated or debulked braided preform layer, and mechanical pressure is applied to the braided preform layers to consolidate or debulk, or both, the braided preform layers to thereby provide the near-net braided preform from which the net-trimmed braided structure with the desired shape can be fabricated.

In some embodiments, a braidable material is moved from a braiding wheel onto a layup mandrel to form a braided preform layer on the layup mandrel.

In some embodiments, a thermoplastic slit-tape having unidirectional fibers is moved from a braiding wheel onto a layup mandrel to form the braided preform layer on the layup mandrel.

In some embodiments, a portion of the near-net braided preform is stamped out to provide the net-trimmed braided structure with the desired shape.

In some embodiments, the method is performed by a controller having a memory executing one or more programs of instructions which are tangibly embodied in a program storage medium readable by the controller.

A number of advantages are provided by having components of the apparatus 200 arranged in an in-line configuration. One advantage is that both time savings and labor-cost savings result by not having to dismount a previously-formed braided preform layer from its layup mandrel and moving it to another layup mandrel (or could be the same layup mandrel) to form another braided preform layer on the previously-formed braided preform layer to provide an overbraided braided preform having multiple braided layers.

Another advantage is that in-situ consolidating and/or debulking of braided structures enhances the automation and output rate of serial braiding production lines. Consolidation and/or debulking capabilities are added without affecting lead times, which allows for quick overbraiding on the same braiding wheel, or on one or more additional braiding wheels in series if a production output rate is high enough. The in-situ consolidating and/or debulking of multiple-layered braided structures (or single-layered braided structures) are integrated in a serial braiding production line to provide a fully automated serial production process for slit-tape braided multilayered (or single layered) shaped blanks for stamp forming or even fully consolidated parts.

Still another advantage is that there is no need to consolidate the braided preform to an exact shape since post-processing such as stamp-forming is much faster and leaves no wrinkles in the net-trimmed braided structure.

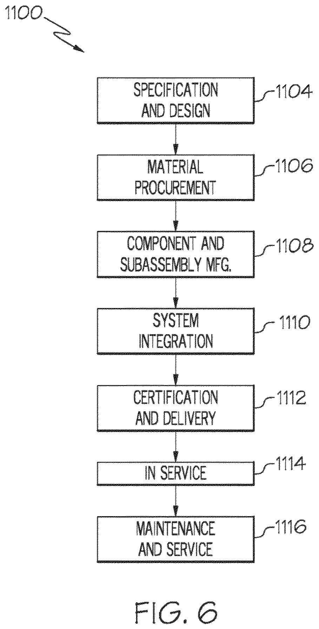

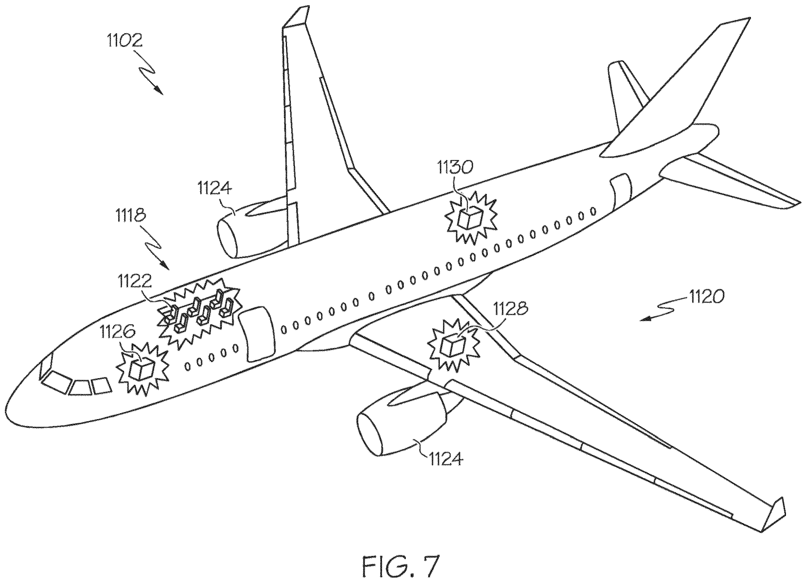

Examples of the disclosure may be described in the context of an aircraft manufacturing and service method 1100, as shown in Fig. 6, and an aircraft 1102, as shown in Fig. 7. During pre-production, the aircraft manufacturing and service method 1100 may include specification and design 1104 of the aircraft 1102 and material procurement 1106. During production, component/subassembly manufacturing 1108 and system integration 1110 of the aircraft 1102 takes place. Thereafter, the aircraft 1102 may go through certification and delivery 1112 in order to be placed in service 1114. While in service by a customer, the aircraft 1102 is scheduled for routine maintenance and service 1116, which may also include modification, reconfiguration, refurbishment and the like.

Each of the processes of method 1100 may be performed or carried out by a system integrator, a third party, and/or an operator (e.g., a customer). For the purposes of this description, a system integrator may include without limitation any number of aircraft manufacturers and major-system subcontractors; a third party may include without limitation any number of venders, subcontractors, and suppliers; and an operator may be an airline, leasing company, military entity, service organization, and so on.

As shown in Fig. 7, the aircraft 1102 produced by example method 1100 may include an airframe 1118 with a plurality of systems 1120 and an interior 1122. Examples of the plurality of systems 1120 may include one or more of a propulsion system 1124, an electrical system 1126, a hydraulic system 1128, and an environmental system 1130. Any number of other systems may be included.

The disclosed apparatus and method may be employed during any one or more of the stages of the aircraft manufacturing and service method 1100. As one example, components or subassemblies corresponding to component/subassembly manufacturing 1108, system integration 1110, and/or maintenance and service 1116 may be assembled using the disclosed apparatus and method. As another example, the airframe 1118 may be constructed using the disclosed apparatus and method. Also, one or more apparatus examples, method examples, or a combination thereof may be utilized during component/subassembly manufacturing 1108 and/or system integration 1110, for example, by substantially expediting assembly of or reducing the cost of an aircraft 1102, such as the airframe 1118 and/or the interior 1122. Similarly, one or more of system examples, method examples, or a combination thereof may be utilized while the aircraft 1102 is in service, for example and without limitation, to maintenance and service 1116.

Aspects of disclosed embodiments may be implemented in software, hardware, firmware, or a combination thereof. The various elements of the manufacturing system 100 (Fig. 1), either individually or in combination, may be implemented as a computer program product (program of instructions) tangibly embodied in a machine-readable storage device (storage medium) for execution by a processor. Various steps of embodiments may be performed by a computer processor executing a program tangibly embodied on a computer-readable medium to perform functions by operating on input and generating output. The computer-readable medium may be, for example, a memory, a transportable medium such as a compact disk or a flash drive, such that a computer program embodying aspects of the disclosed embodiments can be loaded onto a computer.

The above-described apparatus and method are described in the context of an aircraft. However, one of ordinary skill in the art will readily recognize that the disclosed apparatus and method are suitable for a variety of applications, and the present disclosure is not limited to aircraft manufacturing applications. For example, the disclosed apparatus and method may be implemented in various types of vehicles including, for example, helicopters, passenger ships, automobiles, marine products (boat, motors, etc.) and the like. Non-vehicle applications are also contemplated.

Also, although the above-description describes an apparatus and method for forming a braided structure for an airplane part in the aviation industry in accordance with military and space regulations, it is contemplated that the apparatus and method may be implemented to facilitate forming a braided structure in any industry in accordance with the applicable industry standards. The specific apparatus and method can be selected and tailored depending upon the particular application.

Further, although various aspects of disclosed embodiments have been shown and described, modifications may occur to those skilled in the art upon reading the specification. The present application includes such modifications and is limited only by the scope of the claims.

For reasons of completeness, various aspects of the present disclosure are set out in the following numbered clauses:
1. A method (400) for forming a braided preform (206) with a desired shape, the method (500) comprising:
   forming (410) a braided preform layer (204); and
   applying (420) an in-line mechanical pressure (P) to the braided preform layer (204) to consolidate or debulk, or both, the braided preform layer (204) to thereby provide the braided preform (206) with the desired shape (207).
2. The method (400) of Clause 1 further comprising:
   forming at least one additional braided preform layer (204a) over the formed braided preform layer (204) to form two or more braided preform layers (204, 204a) prior to applying in-line mechanical pressure (P) to the two or more braided preform layers (204, 204a).
3. The method (400) of Clause 2 wherein applying an in-line mechanical pressure (P) includes:
   applying an in-line mechanical pressure (P) to the two or more braided preform layers (204, 204a) to consolidate or debulk, or both, the two or more braided preform layers (204, 204a) to thereby provide the braided preform (206) with the desired shape (207).
4. The method (400) of any of Clauses 1 to 3 further comprising:
   forming another braided preform layer (204a) over the consolidated or debulked braided preform (206); and
   applying an in-line mechanical pressure (P) to the braided preform layers (204, 204a) to consolidate or debulk, or both, the braided preform layers (204, 204a) to thereby provide the braided preform (206) with the desired shape (207).
5. The method (400) of any of Clauses 1 to 4 wherein forming a braided preform layer (204) includes:
   moving a braidable material (130) from a braiding wheel (210) onto a layup mandrel (220) to form the braided preform layer (204) on the layup mandrel (220).
6. The method (400) of Clause 5 wherein moving a braidable material (130) from a braiding wheel (210) onto a layup mandrel (220) to form the braided preform layer (204) on the layup mandrel (220) includes:
   moving a thermoplastic slit-tape (130) having unidirectional fibers (132) from the braiding wheel (210) onto the layup mandrel (220) to form the braided preform layer (204) on the layup mandrel (220).
7. The method (400) of Clause 5 wherein moving a braidable material (130) from a braiding wheel (210) onto a layup mandrel (220) to form the braided preform layer (204) on the layup mandrel (220) includes:
   moving the braidable material (130) from the braiding wheel (210) onto a spar mandrel (220) to form a braided preform layer (204) on the spar mandrel (220).
8. The method (400) of Clause 5 wherein moving a braidable material (130) from a braiding wheel (210) onto a layup mandrel (220) to form the braided preform layer (204) on the layup mandrel (220) includes:
   moving a thermoplastic slit-tape (130) having unidirectional fibers (132) from the braiding wheel (210) onto a spar mandrel (220) to form the braided preform layer (204) on the spar mandrel (220).
9. The method (400) of any of Clauses 1 to 8 further comprising:
   applying heat to the braided preform layer (204).
10. The method (400) of Clause 9 wherein applying heat to the braided preform layer (204) includes:
   applying heat from a select one of a microwave source (230) and an infrared source (230) to the braided preform layer (204).
11. The method (400) of any of Clauses 1 to 10 wherein applying an in-line mechanical pressure (P) to the braided preform layer (204) includes:
   applying an in-line mechanical pressure (P) from a number of forming rollers (242) circumferentially spaced apart around a central axis (228) of a layup mandrel (220) to the braided preform layer (204).
12. The method (400) of Clause 11 wherein applying an in-line mechanical pressure (P) from a number of forming rollers (242) circumferentially spaced apart around a central axis (228) of a layup mandrel (220) to the braided preform layer (204) includes:
   applying an in-line mechanical pressure from a number of forming rollers (242) circumferentially spaced equidistantly apart from each other around the central axis (228) of the layup mandrel (220) to the braided preform layer (204).
13. The method (400) of any of Clauses 1 to 12 wherein the method (400) is performed by a controller (110) having a memory (114) executing one or more programs of instructions which are tangibly embodied in a program storage medium readable by the controller (110).
14. A portion of an aircraft (1102) assembled according to the method (400) of any of Clauses 1 to 13.
15. An apparatus (200) for forming a braided preform (206) with a desired shape (207), the apparatus (200) comprising:
   a layup mandrel (220) having a central portion (224) interconnecting opposite end portions (222, 226);
   a braiding wheel (210) disposed at one end portion (222) of the layup mandrel (220) and arranged to receive braiding material (130) for a braided preform layer (204) to be formed on the layup mandrel (220); and
   a pressure-application device (240) disposed at the other end portion (226) of the layup mandrel (220) and arranged to apply mechanical pressure (P) to the braided preform layer (204) on the layup mandrel (220) to thereby form the braided preform (206).
16. The apparatus (200) of Clause 15 wherein the braiding wheel (210) is capable of longitudinally traversing between the opposite end portions (222, 226) of the layup mandrel (220).
17. The apparatus (200) of any of Clauses 15 or 16 wherein the layup mandrel (220) comprises an elongated shape having a longitudinal central axis (228).
18. The apparatus (200) of any of Clauses 15 or 16 wherein the layup mandrel (220) comprises a curvilinear shape having a central axis (228).
19. The apparatus (200) of any of Clauses 15 to 18 further comprising: a heat source (230) arranged to apply heat at the central portion (224) of the layup mandrel (220) to thereby heat the braided preform layer (204) on the layup mandrel (220).
20. The apparatus (200) of Clause 19 wherein the heat source (230) comprises a select one of a microwave source (230) and an infrared source (230).
21. The apparatus (200) of any of Clauses 15 to 20 wherein the pressure-application device (240) includes a number of forming rollers (242) circumferentially spaced apart around a central axis (228) of the layup mandrel (220).
22. The apparatus (200) of any of Clauses 15 to 20 wherein the pressure-application device (240) includes a number of forming rollers (242) circumferentially spaced equidistantly apart from each other around a central axis (228) of the layup mandrel (220).
23. The apparatus (200) of any of Clauses 15 to 22 further comprising: a controller (110) arranged to control the pressure-application device (240) to consolidate or debulk, or both, the braided preform layer (204) on the layup mandrel (220).
24. A method for fabricating a portion of an aircraft using the apparatus (200) of any of Clauses 15 to 23.
25. A method (500) for fabricating a net-trimmed braided structure (190) with a desired shape, the method (500) comprising:
   forming (510) a braided preform layer (204) along an in-line manufacturing process; and
      applying (520) mechanical pressure to the braided preform layer (204) to consolidate or debulk, or both, the braided preform layer (204) to thereby provide a near-net braided preform (206) from which the net-trimmed braided structure (190) with the desired shape can be fabricated.
26. The method (500) of Clause 25 further comprising:
   forming at least one additional braided preform layer (204a) over the formed braided preform layer (204) to form two or more braided preform layers (204, 204a) prior to applying mechanical pressure to the two or more braided preform layers (204, 204a).
27. The method (500) of Clause 26 wherein applying mechanical pressure includes:
   applying mechanical pressure to the two or more braided preform layers (204, 204a) to consolidate or debulk, or both, the two or more braided preform layers (204, 204a) to thereby provide the near-net braided preform (206).
28. The method (500) of Clause 25 further comprising:
   forming another braided preform layer (204a) over the consolidated or debulked braided preform (206); and
   applying mechanical pressure to the braided preform layers (204, 204a) to consolidate or debulk, or both, the braided preform layers (204, 204a) to thereby provide the near-net braided preform (206) from which the net-trimmed braided structure (190) with the desired shape can be fabricated.
29. The method (500) of any of Clauses 25 to 28 wherein forming a braided preform layer (204) includes:
   moving a braidable material (130) from a braiding wheel (210) onto a layup mandrel (220) to form a braided preform layer (204) on the layup mandrel (220).
30. The method (500) of Clause 29 wherein moving the braidable material (130) from the braiding wheel (210) onto a layup mandrel (220) to form a braided preform layer (204) on the layup mandrel (220) includes:
   moving a thermoplastic slit-tape (130) having unidirectional fibers 132 from the braiding wheel (210) onto the layup mandrel (220) to form the braided preform layer (204) on the layup mandrel (220).
31. The method (500) of any of Clauses 25 to 30 further comprising:
   stamping out a portion of the near-net braided preform (206) to provide the net-trimmed braided structure (190) with the desired shape.
32. The method (500) of any of Clauses 25 to 31 wherein the method (500) is performed by a controller (110) having a memory executing one or more programs of instructions which are tangibly embodied in a program storage medium readable by the controller (110).

## Claims

1. A method (400) for forming a braided preform (206) with a desired shape, the method (500) comprising:
forming (410) a braided preform layer (204); and
applying (420) an in-line mechanical pressure (P) to the braided preform layer (204) to consolidate or debulk, or both, the braided preform layer (204) to thereby provide the braided preform (206) with the desired shape (207).

2. The method (400) of Claim 1 further comprising:
forming at least one additional braided preform layer (204a) over the formed braided preform layer (204) to form two or more braided preform layers (204, 204a) prior to applying in-line mechanical pressure (P) to the two or more braided preform layers (204, 204a).

3. The method (400) of Claim 2 wherein applying an in-line mechanical pressure (P) includes:
applying an in-line mechanical pressure (P) to the two or more braided preform layers (204, 204a) to consolidate or debulk, or both, the two or more braided preform layers (204, 204a) to thereby provide the braided preform (206) with the desired shape (207).

4. The method (400) of any of Claims 1 to 3 further comprising:
forming another braided preform layer (204a) over the consolidated or debulked braided preform (206); and
applying an in-line mechanical pressure (P) to the braided preform layers (204, 204a) to consolidate or debulk, or both, the braided preform layers (204, 204a) to thereby provide the braided preform (206) with the desired shape (207).

5. The method (400) of any of Claims 1 to 4 wherein forming a braided preform layer (204) includes:
moving a braidable material (130) from a braiding wheel (210) onto a layup mandrel (220) to form the braided preform layer (204) on the layup mandrel (220).

6. The method (400) of Claim 5 wherein moving a braidable material (130) from a braiding wheel (210) onto a layup mandrel (220) to form the braided preform layer (204) on the layup mandrel (220) includes:
moving a thermoplastic slit-tape (130) having unidirectional fibers (132) from the braiding wheel (210) onto the layup mandrel (220) to form the braided preform layer (204) on the layup mandrel (220), or
moving the braidable material (130) from the braiding wheel (210) onto a spar mandrel (220) to form a braided preform layer (204) on the spar mandrel (220), or
moving a thermoplastic slit-tape (130) having unidirectional fibers (132) from the braiding wheel (210) onto a spar mandrel (220) to form the braided preform layer (204) on the spar mandrel (220).

7. The method (400) of any of Claims 1 to 6 further comprising:
applying heat to the braided preform layer (204).

8. The method (400) of Claim 7 wherein applying heat to the braided preform layer (204) includes:
applying heat from a select one of a microwave source (230) and an infrared source (230) to the braided preform layer (204).

9. The method (400) of any of Claims 1 to 8 wherein applying an in-line mechanical pressure (P) to the braided preform layer (204) includes:
applying an in-line mechanical pressure (P) from a number of forming rollers (242) circumferentially spaced apart around a central axis (228) of a layup mandrel (220) to the braided preform layer (204).

10. An apparatus (200) for forming a braided preform (206) with a desired shape (207), the apparatus (200) comprising:
a layup mandrel (220) having a central portion (224) interconnecting opposite end portions (222, 226);
a braiding wheel (210) disposed at one end portion (222) of the layup mandrel (220) and arranged to receive braiding material (130) for a braided preform layer (204) to be formed on the layup mandrel (220); and
a pressure-application device (240) disposed at the other end portion (226) of the layup mandrel (220) and arranged to apply mechanical pressure (P) to the braided preform layer (204) on the layup mandrel (220) to thereby form the braided preform (206).

11. The apparatus (200) of Claim 10 wherein the braiding wheel (210) is capable of longitudinally traversing between the opposite end portions (222, 226) of the layup mandrel (220).

12. The apparatus (200) of any of Claims 10 or 11 wherein the layup mandrel (220) comprises an elongated shape having a longitudinal central axis (228) or a curvilinear shape having a central axis (228).

13. The apparatus (200) of any of Claims 10 to 12 further comprising:
a heat source (230) arranged to apply heat at the central portion (224) of the layup mandrel (220) to thereby heat the braided preform layer (204) on the layup mandrel (220).

14. The apparatus (200) of any of Claims 10 to 13 wherein the pressure-application device (240) includes a number of forming rollers (242) circumferentially spaced apart, preferably spaced equidistantly apart from each other, around a central axis (228) of the layup mandrel (220).

15. The apparatus (200) of any of Claims 10 to 14 further comprising:
a controller (110) arranged to control the pressure-application device (240) to consolidate or debulk, or both, the braided preform layer (204) on the layup mandrel (220).
